# EUROPEAN PATENT APPLICATION

(11) **EP 1 361 029 A2**
(43) Date of publication of application: **12.11.2003**
(21) Application number: 03425248.6
(22) Date of filing: 18.04.2003
(51) Int. Cl.: B27B 5/065, B23D 47/02

(54) **A table for the manual handling of panels or similar items in a panel saw machine**

(30) Priority: 29.04.2002 IT BO20020242
(71) Applicant: GIBEN INTERNATIONAL S.p.A., 40065 Pianoro (Bologna) (IT)
(72) Inventor: Benuzzi, Piergiorgio, 40121 Bologna (IT)
(74) Representative: Lanzoni, Luciano

(57) **Abstract**

A panel saw machine (1) is equipped with a rear table (4) for feeding panels (3) to a cutting station (2) installed along one edge (7) of the feed table (4), and a table (6; 6') for the manual handling of the panels (3) by an operator; the handling table (6; 6') is located in the same plane as the feed table (4), at the front end relative to the cutting station (2), and comprises a plurality of peninsulas (9, 10, 11; 9', 10', 11') on which the panels slide and are supported, and a connecting portion (12; 12') joining the peninsulas (9, 10, 11; 9', 10', 11') to each other. The connecting portion (12; 12'), together with each pair of adjacent peninsulas (9, 10, 11; 9', 10', 11'), forms a bay (17, 18; 17', 18') that delimits a working space for the operator, and, together with the peninsulas (9, 10, 11; 9', 10', 11') in their entirety, a handling surface (16; 16') extending uninterruptedly between each pair of adjacent peninsulas (9, 10, 11; 9', 10', 11').

## Description

The present invention relates to a table for the manual handling of panels or similar items in a panel saw machine.

Panel saw machines are used to cut large panels into smaller sub-panels. The panels are usually made mainly of a wood-based material but also of other materials such as, for example, plastic, light alloys or steel.

The present specification refers, but without restricting the scope of the invention, to panel saw machines having a single cutting station where the panels are cut both lengthways and crossways.

Normally, prior art panel saw machines include a rear horizontal feed table on which a mobile element, commonly known as pusher, feeds the panels to be cut towards a cutting station downstream. At the front of the cutting station, an operator receives the panels, cut lengthways into strips, on a handling table consisting of a plurality of sections lying in the same plane as the feed table. Usually, the panels are not cut one by one but in groups consisting of vertically stacked panels forming piles of considerable size. During the cutting operation, the panel stacks are held in place on the feed table by gripping elements, for example of the jaw type, which grip the panels by their back edges.

Normally, the table sections are substantially rectangular in shape, parallel and positioned at a certain distance from each other so as to give the operator enough room to work in. The operator stands in one of the spaces between the table sections and, operating manually on the panel stacks that have been cut lengthways, turns them by 90° and pushes them back towards the cutting station crossways. The second cutting operation cuts the panels crossways to make a plurality of smaller stacks of sub-panels.

In some panel saw machines, the panels are loaded from the front instead of the back, that is to say, they are loaded on the above mentioned handling table. In this case, the cutting process is substantially the same as that described above, except that for the lengthways cut, it is the operator who pushes the panels towards the pusher which then feeds them to the cutting station for sawing.

Whether the panels are loaded from the front or from the back, the shape of the table sections and their position relative to each other may lead to several problems. Thus, while the strips of panels are being rotated, the panels at the bottom of the stacks may be knocked and/or scratched against the edges and corners of the table sections. The larger the gaps between the table sections, the higher the risk of this occurring, although the gaps must naturally be large enough to give the operator room to manoeuvre and, above all, must guarantee easy access to the corners between the table sections themselves. Moreover, for obvious safety reasons, it must be just as easy for the operator to get into a corner between table sections as it is to get out. The operator must not at any time be trapped inside one of the corners while the pusher feeds the panels to the cutting station.

The present invention has for its main object to provide a manual handling table for panels or similar items, which is free of the above mentioned disadvantages, that is to say, which reduces the risk of the panels jamming or being damaged while, at the same time allowing the operator to work safely and with ample room to manoeuvre.

Accordingly, the present invention provides a table for the manual handling of panels or similar items in a panel saw machine; the machine comprising a feed table for the panels and a cutting station installed along one edge of the feed table; the handling table being located in the same plane as the feed table, on the side of the cutting station opposite that where the feed table is located, the handling table being characterised in that it comprises: a plurality of peninsulas on which the panels slide and are supported during manual handling; and a connecting portion joining the peninsulas to each other; the connecting portion, together with each pair of adjacent peninsulas, forming a bay that delimits a working space for the operator, and, together with the peninsulas in their entirety, a handling surface extending uninterruptedly between each pair of adjacent peninsulas.

The connecting portion, which acts as a "bridge" between the peninsulas, prevents the panels from jamming or getting damaged as they pass from one peninsula to another adjacent to it.

The invention will now be described with reference to the accompanying drawings which illustrate preferred embodiments of it and in which:
- Figure 1 is schematic plan view of a panel saw machine comprising a first preferred embodiment of the manual, panel handling table according to the present invention;
- Figure 2 is a scaled-up cross section through line II - II of Figure 1, with some parts cut away for clarity, showing a detail from Figure 1; and
- Figure 3 is schematic plan view of a panel saw machine comprising a second preferred embodiment of the manual, panel handling table according to the present invention.

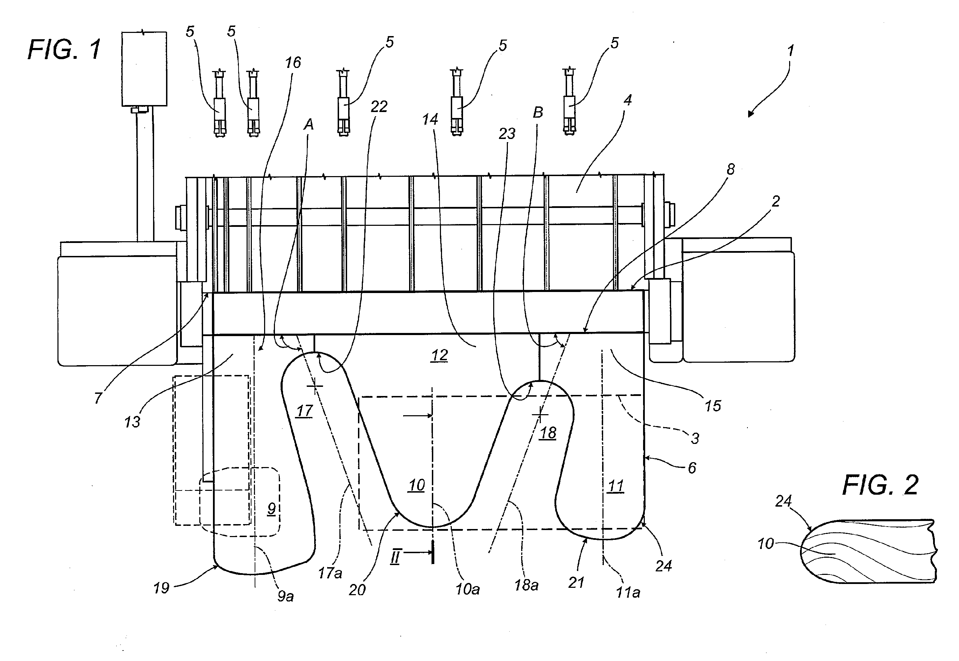

With reference to Figure 1, the numeral 1 denotes in its entirety a panel saw machine equipped with a single cutting station 2 where stacks of panels 3 are cut both lengthways and crossways.

At the back of the cutting station 2, the machine 1 comprises a horizontal feed table 4 equipped with customary, jaw-type gripping means 5 operatively associated with the back edge of the panels 3 to hold them in position on the feed table 4 during cutting operations.

At the front of the cutting station 2, the machine 1 comprises a handling table 6 forming the subject-matter of the present invention.

The handling table 6 is located in the same plane as the feed table 4 on the side of the cutting station 2 opposite that where the feed table 4 is located. The cutting station 2 extends, at the back, along a front edge 7 of the feed table 4 and, at the front, along a back edge 8 of the handling table 6. The two edges 7 and 8 are parallel to each other.

The handling table 6 comprises three peninsulas 9, 10 and 11 on which the panels 3 slide and are supported during manual handling; and a connecting portion 12 joining the peninsulas 9, 10 and 11 to each other.

The handling table 6 is made up of three sections 13, 14 and 15 mounted stably side by side and each constituting one of the three peninsulas 9, 10 and 11. In this particular embodiment, the sections 13, 14 and 15 are approximately 90cm, 2m and 90cm wide, respectively, although numerous variants with different measurements, but with the same ratio of proportionality between them, are possible. In other embodiments, which are not illustrated, the handling table 6 may consist of two sections, also mounted stably side by side, or even of a single piece.

Whatever the case, the connecting portion 12, together with the peninsulas 9, 10 and 11 in their entirety, constitutes a handling surface 16 extending uninterruptedly between each pair of adjacent peninsulas 9, 10, 11.

Advantageously, the surface 16 is made of a low-friction material so that the stacks of panels 3 can slide on it more easily. For this purpose, the surface 16 may be coated with matting, brushes or similar materials, or it may include an air cushion of known type designed to oppose the weight force of the panels 3, thus reducing the friction between the panels and the surface 16.

In addition, the connecting portion 12, together with each pair of adjacent peninsulas 9, 10, 11, forms a bay that delimits a space within which the operator can work. The bay between the peninsulas 9 and 10 is labelled 17, while the bay between the peninsulas 10 and 11 is labelled 18. In this particular embodiment, both bays 17 and 18 are approximately 70cm wide.

The edge 8 delimits the back of the connecting portion 12 from which each peninsula 9, 10, 11 extends towards the front along respective longitudinal axes 9a, 10a, 11a each at right angles to the edge 8. The peninsula 9 is slightly longer than the peninsulas 10 and 11.

Looking in more detail, of the three peninsulas 9, 10, 11, the peninsulas 9 and 11, located, respectively on the left and on the right in Figure 1, extend asymmetrically about their longitudinal axes 9a, 11a and become wider along their respective axes 9a, 11a, starting from the connecting portion 12. The middle peninsula 10, on the other hand, extends symmetrically about its longitudinal axis 10a and becomes narrower along its axis 10a, starting from the connecting portion 12.

The bays 17 and 18 extend from the connecting portion 12 along longitudinal axes 17a, 18a that make respective angles A and B with the edge 8. More specifically, the angle A is obtuse, the angle B acute and their sum is 180°. The longitudinal axes 17a, 18a of the bays 17 and 18 are convergent, starting from the connecting portion 12 and, in the embodiment being described, make an angle of approximately 40° with each other.

The bays 17, 18 extend symmetrically about their respective axes 17a, 18a and become gradually wider along the axes 17a, 18a themselves, starting from the connecting portion 12.

On the side opposite the connecting portion 12, all three peninsulas 9, 10 and 11 are delimited by respective edges 19, 20 and 21 that form rounded or curved ends, and, in the same way, both bays 17 and 18 are delimited, at the connecting portion 12, by respective edges 22 and 23 that form rounded or curved ends.

Moreover, as shown in Figure 2, the peninsula 10, but also the peninsulas 9 and 11, is perimetrically shaped in such a way that the handling table 6 is delimited, on the outside of the edge 8 of the connecting portion 12, by a shaped perimetric edge 24 whose cross section is rounded or curved.

The handling table 6, thanks to the features described above, provides the operator with a working space that is at once ergonomic and safe.

As mentioned above, the connecting portion 12 allows the panels 3 to be transferred from one peninsula 9, 10, 11 to another adjacent to it without letting the panels 3 jam or get damaged in the process. The connecting portion 12 is within easy reach of the operator through the bays 17 and 18 and the operator can easily move from one bay to the other since the areas giving access to them are close together. That is because the longitudinal axes 17a and 18a of the bays 17 and 18 converge on each other, starting from the connecting portion 12, and because the middle peninsula 10, that separates the bays 17 and 18, is substantially triangular in shape, wider at the connecting portion 12 and narrower at the other end, along its longitudinal axis 10a.

The peninsula 9 is advantageously longer than the peninsulas 10 and 11, which means that the operator, working from inside the bay 17, can transfer to the peninsula 9 long strips of panels 3 to be cut crossways.

Further, the front end of the peninsula 9, that is to say, the end closest to the edge 19 is very wide and thus provides a large and stable supporting surface for the panels 3.

The operator's working safety is further guaranteed by the following two additional constructional features of the bays 17 and 18: both bays extend symmetrically about their longitudinal axes 17a, 18a and are wider at the open end, towards the outside of the machine.

Lastly, the edges of the handling table 6, both crossways and around it, are rounded, that is to say, there no sharp edges or corners on any part of the handling table 6 or around its perimeter, which means that the edges do not constitute a risk for the operator.

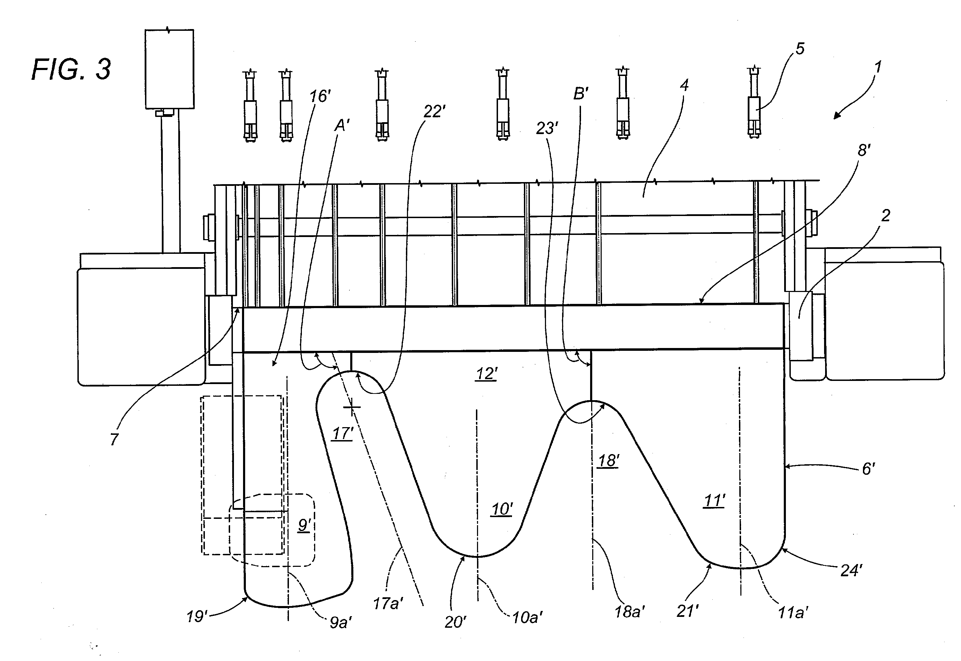

Figure 3 shows another embodiment of the handling table 6 where the handling table, labelled 6' in this case, has a different shape from that of the handling table 6 but offers the same advantages. In Figure 3, the parts of the handling table 6' corresponding to those of the handling table 6 illustrated in Figure 1 have the same reference characters as those in Figure 1 but are distinguished from the latter by a prime.

The handling table 6' is made up of three sections 13', 14' and 15' mounted stably side by side and each constituting one of three peninsulas 9', 10' and 11'. In this embodiment, too, the peninsula 9' is slightly longer than the others. In this case, the sections 13', 14' and 15' are approximately 90cm, 2m and 1.6m wide.

Of the three peninsulas 9', 10' and 11', the peninsulas 9' and 11', located, respectively on the left and on the right in Figure 3, extend asymmetrically about their longitudinal axes 9a' and 11a' and the former becomes wider along its axis 9a' starting from the connecting portion 12', while the latter becomes narrower along its axis 11a' starting from the connecting portion 12'. The middle peninsula 10', on the other hand, extends symmetrically about its longitudinal axis 10a' and becomes narrower along its axis 10a', starting from the connecting portion 12'.

Again, the axes 9a', 10a' and 11a' make right angles with the rear edge 8' of the connecting portion 12', and the connecting portion 12', together with the peninsulas 9', 10' and 11' in their entirety, constitutes a handling surface 16' extending uninterruptedly between each pair of adjacent peninsulas 9', 10' 11'. The surface 16' is also made of a low-friction material so that the stacks of panels 3 can slide on it more easily. For this purpose, the surface 16' may be coated with matting, brushes or similar materials, or it may include an air cushion of known type designed to oppose the weight force of the panels 3, thus reducing the friction between the panels and the surface 16'.

The bays 17' and 18' extend from the connecting portion 12' along longitudinal axes 17a' and 18a' that make respective angles A' and B' with the edge 8'. More specifically, the angle A' is obtuse, while the angle B' is a right angle. The longitudinal axes 17a', 18a' of the bays 17' and 18' are convergent, starting from the connecting portion 12' and, in this particular embodiment, make an angle of approximately 20° with each other. The bays 17', 18' extend symmetrically about their respective axes 17a', 18a' and become wider along the axes 17a', 18a' themselves, starting from the connecting portion 12'.

Looking in more detail, the bay 17' becomes slightly wider, about 70cm, along its longitudinal axis 17a', while the width of the bay 18' increases more markedly along the axis 18a', forming an extended flared portion that makes an angle of approximately 50°.

Also in the handling table 6' of Figure 3, all three peninsulas 9', 10' and 11' are delimited, on the side opposite the connecting portion 12', by respective edges 19', 20' and 21' that form rounded or curved ends, and, in the same way, both bays 17' and 18' are delimited, at the connecting portion 12', by respective edges 22' and 23' that form rounded or curved ends.

Moreover, like the handling table 6 of Figure 1, the three peninsulas 9', 10' and 11' are perimetrically shaped in such a way that the handling table 6' is delimited, on the outside of the rear edge 8' of the connecting portion 12', by a shaped perimetric edge 24' whose cross section is rounded or curved.

Finally, it will be understood that the handling table according to the invention is not restricted to the embodiments described above purely by way of example, but may be modified and adapted in several ways without thereby departing from the scope of the inventive concept.

## Claims

1. A table for the manual handling of panels or similar items in a panel saw machine; the machine (1) comprising a table (4) for feeding panels (3) to a cutting station (2) installed along one edge (7) of the feed table (4), the handling table (6; 6') being located in the same plane as the feed table (4) on the side of the cutting station (2) opposite that where the feed table (4) is located; the handling table (6; 6') being **characterised in that** it comprises a plurality of peninsulas (9, 10, 11; 9', 10', 11') on which the panels (3) slide and are supported, and a connecting portion (12; 12') joining the peninsulas (9, 10, 11; 9', 10', 11') to each other; the connecting portion (12; 12'), together with each pair of adjacent peninsulas (9, 10, 11; 9', 10', 11'), forming a bay (17, 18; 17', 18') that delimits a working space for the operator, and, together with the peninsulas (9, 10, 11; 9', 10', 11') in their entirety, a handling surface (16; 16') extending uninterruptedly between each pair of adjacent peninsulas (9, 10, 11; 9', 10', 11').

2. The handling table according to claim 1, **characterised in that** it comprises three peninsulas (9, 10, 11; 9', 10', 11').

3. The handling table according to claim 1 or 2, **characterised in that** the connecting portion (12; 12') is delimited, on the side opposite the peninsulas (9, 10, 11; 9', 10', 11'), by an edge (8; 8') running along the cutting station (2) in parallel with the edge (7) of the feed table (4).

4. The handling table according to claim 3, **characterised in that** each peninsula (9, 10, 11; 9', 10', 11') extends from the connecting portion (12; 12') along a respective longitudinal axis (9a, 10a, 11a; 9a', 10a', 11a') that makes a defined angle with the edge (8; 8') of the connecting portion (12; 12').

5. The handling table according to claim 4, **characterised in that** at least one peninsula (9, 11; 9', 11') extends asymmetrically about its longitudinal axis (9a, 11a; 9a', 11a').

6. The handling table according to claim 4 or 5, **characterised in that** at least one peninsula (9, 11; 9') becomes wider along its respective axis (9a, 11a; 9a'), starting from the connecting portion (12; 12').

7. The handling table according to any of the foregoing claims from 4 to 6, **characterised in that** at least one peninsula (10; 10') extends symmetrically about its longitudinal axis (10a; 10a').

8. The handling table according to any of the foregoing claims from 4 to 7, **characterised in that** at least one peninsula (10; 10', 11') becomes narrower along its respective longitudinal axis (10a; 10a', 11a'), starting from the connecting portion (12; 12').

9. The handling table according to any of the foregoing claims from 3 to 8, **characterised in that** each bay (17, 18; 17', 18') extends from the connecting portion (12; 12') along a respective longitudinal axis (17a, 18a; 17a', 18a') that makes a defined angle (A, B; A', B') with the edge (8; 8') of the connecting portion (12; 12').

10. The handling table according to claim 9, **characterised in that** the longitudinal axes (17a, 18a; 17a', 18a') of at least one pair of adjacent bays (17, 18; 17', 18') converge on each other, starting from the connecting portion (12; 12').

11. The handling table according to claim 9 or 10, **characterised in that** each bay (17, 18; 17', 18') extends symmetrically about its longitudinal axis (17a, 18a; 17a', 18a').

12. The handling table according to claim 11, **characterised in that** each bay (17, 18; 17', 18') becomes wider along its respective longitudinal axis (17a, 18a; 17a', 18a'), starting from the connecting portion (12; 12').

13. The handling table according to any of the foregoing claims from 3 to 12, **characterised in that** it is delimited, on the outside of the rear edge (8; 8') of the connecting portion (12; 12'), by a shaped perimetric edge (24; 24') whose cross section is rounded or curved.

14. The handling table according to any of the foregoing claims from 1 to 13, **characterised in that** each peninsula (9, 10, 11; 9', 10', 11') is delimited, on the side opposite the connecting portion (12; 12'), by a respective edge (19, 20, 21; 19', 20', 21') that forms a rounded or curved end.

15. The handling table according to any of the foregoing claims from 1 to 14, **characterised in that** each bay (17, 18; 17', 18') is delimited, at the connecting portion (12; 12'), by a respective edge (22, 23; 22', 23') that forms a rounded or curved end.

16. The handling table according to any of the foregoing claims from 1 to 15, **characterised in that** it is made in a single piece.

17. The handling table according to any of the foregoing claims from 1 to 15, **characterised in that** it is made in at least two sections (13, 14, 15; 13', 14', 15') mounted stably side by side.

18. The handling table according to any of the foregoing claims from 1 to 15, **characterised in that** it is made in as many sections (13, 14, 15; 13', 14', 15') as there are peninsulas (9, 10, 11; 9', 10', 11'); the sections (13, 14, 15; 13', 14', 15') being mounted stably side by side.

19. A panel saw machine **characterised in that** it comprises a table (6; 6') for the manual handling of panels or similar items made in accordance with any of the foregoing claims from 1 to 18.
